# EUROPÄISCHE PATENTSCHRIFT

(11) **EP 3 172 819 B1**
(45) Veröffentlichungstag und Bekanntmachung des Hinweises auf die Patenterteilung: **07.11.2018**
(21) Anmeldenummer: 15729449.7
(22) Anmeldetag: 15.06.2015
(51) Int. Cl.: H02K 41/03, B65B 3/28, B65B 7/28, B65B 43/59, B65B 65/00, B65G 54/02, B65B 39/12

(54) **VORRICHTUNG ZUM VERSCHLIESSEN EINES BEHÄLTNISSES**
DEVICE FOR CLOSING A RECEPTACLE
DISPOSITIF DE FERMETURE D'UN CONTENANT

(30) Priorität: 25.07.2014 DE 102014214694
(43) Veröffentlichungstag der Anmeldung: 31.05.2017
(73) Patentinhaber: Robert Bosch GmbH, 70442 Stuttgart (DE)
(72) Erfinder: ARLETH, Werner, 73734 Esslingen (DE); KRAUSS, Ulrich, 74532 Ilshofen (DE); PFEIFFER, Stefan, 96052 Bamberg (DE); RUNFT, Werner, 71364 Winnenden (DE); JUNKER, Stefan, 71229 Leonberg (DE); WINDSHEIMER, Joshua, 74589 Satteldorf (DE); RAPPOLD, Andreas, 74589 Satteldorf (DE); PETERS, Jochen, 74564 Crailsheim (DE); FRANGEN, Joachim, 74081 Heilbronn (DE); ZIEGLER, Jochen, 74589 Satteldorf (DE); ULLMANN, Oliver, 74589 Satteldorf (DE); HANISCH, Markus, 70736 Fellbach (DE); EBERHARDT, Albert, 74532 Ilshofen (DE); BANDTEL, Dieter, 74426 Buehlerzell (DE); GRAN, Sebastian, 35452 Heuchelheim (DE)
(86) Internationale Anmeldenummer: PCT/EP2015/063304
(87) Internationale Veröffentlichungsnummer: WO 2016/012159

(56) Entgegenhaltungen:
- EP-A1- 0 601 213
- EP-A1- 2 420 450
- EP-A1- 2 570 350
- EP-A1- 2 589 966
- WO-A1-2013/098202
- WO-A1-2014/063930

## Beschreibung

Die Erfindung geht aus von einer Vorrichtung zum Verschließen eines Behältnisses nach der Gattung des unabhängigen Anspruchs.

### Stand der Technik

Aus der WO 2011/138448 ist bereits ein System zum Transportieren von Behältern zwischen unterschiedlichen Stationen bekannt, wobei die Behälter in Behälterträgern aufgenommen sind. Das System umfasst eine Steuereinheit, die den Transport der Behälterträger steuert, eine Transportfläche, die in Teilflächen unterteilt ist und auf der die Behälterträger beweglich anordenbar sind, und Antriebsmittel, wobei die Antriebsmittel durch die Steuereinheit angesteuert sind und einer jeweiligen Teilfläche ein jeweiliges Antriebsmittel zugeordnet ist, wobei ein jeweiliges Antriebsmittel dazu ausgebildet ist, einen zugehörigen Behälterträger mit einer Antriebskraft zu beaufschlagen. Dieses System zeichnet sich durch hohe Flexibilität aus, wie sie insbesondere zum Transport von Probenbehältern eines Laboranalysesystems gefordert ist.

Aus der EP 2420450 A1 ist bereits eine Abfülleinrichtung eines Produkts in ein Behältnis unter aseptischen Bedingungen bekannt. Diese Vorrichtung umfasst einen Träger, der dazu eingerichtet ist, zumindest zwei Behältnisse aufzunehmen. Fördereinrichtungen bewegen die Behältnisse entlang unterschiedlicher Arbeitsstationen wie eine Zuführstation zur Zuführung der Behältnisse, eine Füllstation zur Befüllung der Behältnisse mit einem Produkt, eine Siegelstation zum Versiegeln der Behältnisse und eine Ausgangsstation, um die Behältnisse wieder zu entfernen, sowie eine Verschließstation, um nach der Siegelstation c das versiegelte Behältnis mit einer Kappe zu versehen. Bei der Fördereinrichtungen handelt es sich um eine magnetische Fördereinrichtungen, um eine drahtlose Energieübertragung über ein Magnetfeld zu ermöglichen. Das magnetische Fördersystem umfasst aufrechte Führungswände an den Seiten, wobei die Führungswände eine Schiene umfassen zur Führung der Behältnisse. Die Fördereinrichtung ist als geschlossener Kreis ausgebildet.

Der Erfindung liegt die Aufgabe zugrunde, ein Verschließsystem weiter zu optimieren. Diese Aufgabe wird gelöst durch die Merkmale des unabhängigen Anspruchs.

### Vorteile der Erfindung

Eine erfindungsgemäße Vorrichtung mit den Merkmalen des unabhängigen Anspruchs hat demgegenüber den Vorteil, dass sequentielle Prozessschritte bzw. fixe Prozessschritte nicht mehr notwendigerweise erforderlich sind. Dadurch, dass zumindest eine Antriebsfläche und zumindest ein auf der Antriebsfläche magnetisch ankoppelbarer Mover vorgesehen sind, und der Mover auf der Antriebsfläche in zumindest zwei Freiheitsgraden verschiebbar und/oder drehbar angeordnet ist und die Behältnisaufnahme auf dem Mover angeordnet ist, lassen sich in besonders flexibler Art und Weise die Behältnisse der Verschließstation zuführen und entfernen. Zudem kann über dieses Antriebsprinzip die Partikelemission bzw. der Abrieb über Relativbewegungen von ansonsten benötigten Rollen, Gleitelementen oder Antriebsmitteln verringert werden, da nun der Mover aufgrund der magnetischen Ankopplung berührungslos relativ zur Antriebsfläche bewegt werden kann. Dies ist gerade für pharmazeutische Verschließanlagen von Vorteil. Außerdem wird die Reinigbarkeit des Systems verbessert, indem lediglich planare Oberflächen notwendig sind ohne die sonst üblichen mechanischen und schwierig zu reinigenden Verbindungen zwischen Antrieb und bewegtem Behältnistransport. Weiterhin wird der Aufwand gerade bei der Einrichtung bzw. Montage der Prozesse zur Verschließstation reduziert, indem der Transport die Behältnisse nicht immer an einer fixen Position zur Verfügung stellen muss. Weiterhin wird die Lebensdauer erhöht durch Reduzierung von Verschleißteilen. Weiterhin können feste, unveränderbare mechanische Routen vermieden werden. Weichenfunktionen sind nicht mehr ortsgebunden, sondern lassen sich durch entsprechende Programmierung an beliebiger Stelle innerhalb der Antriebsfläche festlegen. Das flexible Antriebskonzept mit Überlagerung einer Drehbewegung des Movers kann direkten Einfluss auf das Schwappverhalten eines abgefüllten Behältnisses nehmen, indem der Mover eine Drehbewegung erzeugt, die dem Schwappen des abgefüllten Produkts entgegenwirkt. Erfindungsgemäß ist vorgesehen, dass die Antriebsfläche als vertikale Ebene ausgebildet ist. Dadurch lassen sich gerade für das Verschließen typische Relativbewegungen wie der Transport unterhalb in der Regel vertikal orientierter Komponenten einer Verschließstation besonders einfach realisieren. Besonders zweckmäßig ist hierzu vorgesehen, dass der Mover das Behältnis mit einer vorzugsweise kontinuierlichen Bewegung an einer Zuführung entlang bewegt, so dass der Verschluss auf dem zu verschließenden Behältnis zu liegen kommt. Gerade die freie zumindest zweidimensionale Bewegungsmöglichkeit der Behältnisaufnahme relativ zu den Verschlüssen erlauben geeignete Relativgeschwindigkeiten bzw. identische Geschwindigkeiten zur Erreichung eines zuverlässigen und schnellen Verschließvorgangs.

In einer zweckmäßigen Weiterbildung bewegt sich die Behältnisaufnahme während des Verschließens. Die damit mögliche feste Anordnung gewisser Komponenten einer Verschließstation wiederum wirkt sich partikelreduzierend aus wegen nun nicht auftretender Reibungen dieser Komponenten.

In einer zweckmäßigen Ausgestaltung ist vorgesehen, dass mehrere, unabhängig voneinander verfahrbare Mover vorgesehen sind. Damit lassen sich die Prozessabläufe flexibel gestalten, indem je nach Zustand des Behältnisses andere Stationen angefahren können.

In einer zweckmäßigen Ausgestaltung ist vorgesehen, dass zumindest ein auf der Antriebsfläche insbesondere magnetisch ankoppelbarer Prozessmover vorgesehen sind, und dass zumindest eine Komponente (beispielsweise Stößel, Setzrohr oder Niederhalter) der Verschließstation mit dem Prozessmover verbunden ist zur Bewegung der Komponente durch den Prozessmover. Dadurch ist die Partikelerzeugung reduziert, da auf ein berührungsloses und somit abriebarmes Antriebssystem zurückgegriffen werden kann.

In einer zweckmäßigen Ausgestaltung ist vorgesehen, dass zumindest eine Füllstation und/oder zumindest eine Wiegeeinrichtung und/oder zumindest eine Inspektionseinrichtung und/oder ein Einlauf und/oder ein Auslauf vorgesehen ist und die Antriebsfläche so ausgestaltet ist, dass der Mover zumindest die Behältnisaufnahme zu zumindest einer der vorgenannten Stationen bewegt. Besonders zweckmäßig ist die Antriebsfläche so ausgestaltet, dass der Mover die Behältnisaufnahme wahlweise an zumindest zwei der vorgenannten Stationen bewegt. Damit lassen sich die Prozessabläufe flexibel gestalten, indem je nach Zustand des Behältnisses andere Stationen angefahren können.

Weitere zweckmäßige Weiterbildungen ergeben sich aus weiteren abhängigen Ansprüchen und aus der Beschreibung.

### Zeichnung

Ausführungsbeispiele der erfindungsgemäßen Vorrichtung sind in der Zeichnung dargestellt und werden nachfolgend näher beschrieben. Es zeigen:
- die Figur 1: sowohl eine passives Mover-Modul wie auch ein aktives Mover-Modul mit Spulenpaket zur Spannungsversorgung,
- die Figur 2: eine Systemdarstellung der Vorrichtung,
- die Figur 3: eine perspektivische Darstellung eines Maschinenkonzepts zum Befüllen nestgebundener pharmazeutischer Behältnisse,
- die Figuren 4 und 5: perspektivische Darstellungen weiterer Maschinenkonzepte zum Befüllen von insbesondere pharmazeutischen Behältnissen,
- die Figur 6: die Einlaufsituation mit einem Planarantrieb in neun unterschiedlichen Zuständen a bis i sowie
- die Figur 7: Mover mit befüllten Behältnissen ohne und mit spezieller Ansteuerung, um ein Schwappen eines in dem Behältnis abgefüllten Produkts zu reduzieren.

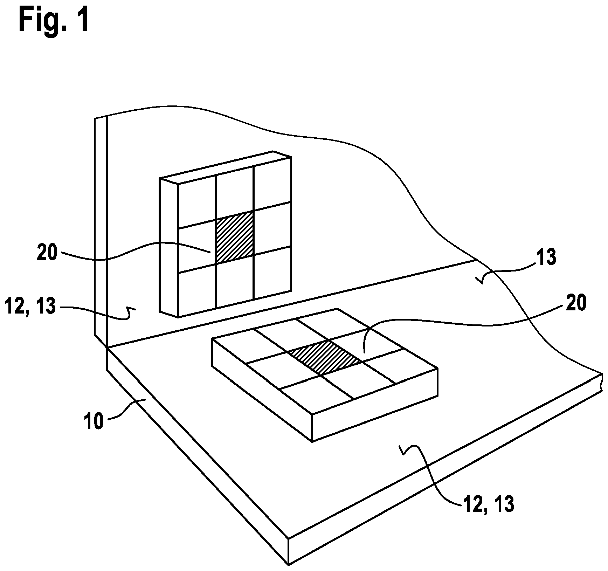

Gemäß Figur 1 umfasst eine Grundplattform 10 eine Trägerplatte 12 bzw. eine Antriebsfläche 13, auf der beweglich zumindest ein Mover 20 angeordnet ist. Bei dem Mover 20 handelt es sich um einen in der Regel passiven Mover 20, der vorzugsweise Permanentmagnete 19 umfasst, die mit Spulen an der Trägerplatte 12 bzw. Antriebsfläche 13 zur Erzeugung einer Relativbewegung zusammenwirkt. Alternativ könnte der Mover 20 jedoch auch aktiv betrieben werden, indem der Mover 20 zumindest ein Spulenpaket zur Spannungsversorgung umfasst, das mit Magnetfeld erzeugenden Mitteln (Permanentmagnete, Spulen) an der Trägerplatte 12 bzw. Antriebsfläche 13 zur Erzeugung einer Relativbewegung in geeigneter Weise zusammenwirkt. Figur 1 zeigt beispielhaft die erste Trägerplatte 12 bzw. Antriebsfläche 13, die als horizontale Ebene ausgebildet ist, sowie eine weitere hieran angrenzende Trägerplatte 12 bzw. Antriebsfläche 13, die als vertikale Ebene ausgebildet ist. Die beiden hierauf angeordneten Mover 20 sind ebenfalls eben ausgebildet und wirken mit den jeweiligen Antriebsflächen 13 so zusammen, dass eine vorzugsweise berührungslose Bewegung der Mover 20 relativ zur Antriebsfläche 13 sowohl in der Ebene der Antriebsflächen 13 in zumindest zwei Freiheitsgraden wie auch optional eine Drehung um die Normale der Antriebsfläche 13 möglich ist.

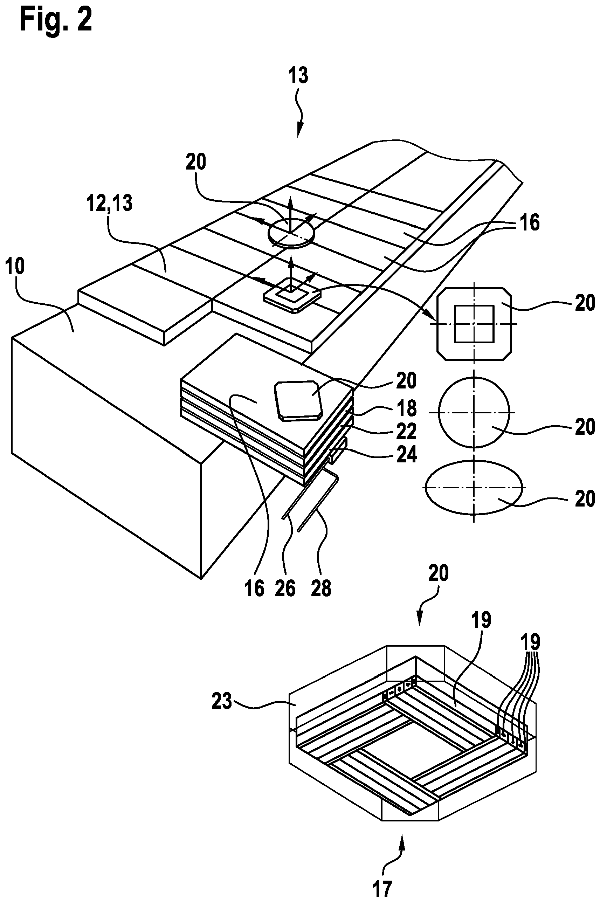

Bei dem Ausführungsbeispiel gemäß Figur 2 sind beispielhaft zwei Mover 20 dargestellt mit unterschiedlichen Grundformen, nämlich ein im Wesentlichen rechteckförmiger Mover 20 bzw. ein runder Mover 20. Auch eine ovale Gestaltung wäre denkbar. Die Trägerplatte 12 bzw. Antriebsfläche 13 besteht aus mehreren Einzelteilen bzw. Kacheln 16. Die Kacheln 16 sind quadratisch bzw. rechteckförmig ausgebildet. Die Kacheln 16 besitzen im Wesentlichen eine planare Oberfläche und sind schichtweise aufgebaut. Die Kachel 16 ist quadratisch bzw. rechteckförmig ausgebildet. So umfasst die Kachel 16 eine Spulenebene 18, eine Sensorebene 22 sowie eine Leistungselektronikebene 24. Weiterhin ist ein Bussystem 26 vorgesehen, welches die Kacheln 16 mit einem nicht dargestellten Zentralrechner bzw. Prozessor verbindet. Außerdem ist eine Spannungsversorgung 28 vorgesehen mit zugehörigen Anschlüssen, über die die Leistungselektronikebene 24 bzw. die Spulenebene 18 und/oder die Sensorebene 22 mit Energie versorgt werden kann.

Die Grundplattform 10 beschreibt das Basiselement. Aus dieser ergeben sich die nötigen Gestaltungsmöglichkeiten des Systems im Raum. Unter der Grundplattform 10 wird der Systemträger bzw. ein Maschinengestell verstanden. Sie muss die notwendige Steifigkeit aufweisen. Die Grundplattform 10 kann bereits Steuerungskomponenten und Leistungselektronik aufnehmen. Optional könnte auch bereits die Trägerplatte 12 bzw. Antriebsfläche 13 Bestandteil der Grundplattform 10 sein. Die Grundplattform 10 bietet die Basis oder das Element zur Anordnung weiterer Funktionseinheiten. Die Grundplattform 10 ist weiterhin die Basis oder das Element zur Anordnung weiterer Transportsysteme. Die Grundplattform 10 soll kompatibel mit anderen Grundplattformen sein. Auf der Oberfläche der Grundplattform 10 sind auf der Antriebsfläche 13 die relativ hierzu beweglichen Mover 20 angeordnet. Hierzu erzeugt die Antriebsfläche 13 bzw. die Trägerplatte 12 eine Antriebskraft, die auf den Mover 20 wirkt und ihn in die gewünschte Bewegung versetzt. Die stationäre Antriebsfläche 13 ist vorzugsweise planar ausgeführt. Der Mover 20 wird so angesteuert, dass er zumindest in zwei Freiheitsgraden verschiebbar und/oder drehbar ist. Damit lassen sich insbesondere wie nachfolgend beschrieben unterschiedliche Stationen in flexibler Weise anfahren, wenn die Antriebsfläche 13 diese in geeigneter Weise miteinander verbindet. Der Mover 20 beschreibt das bewegbare Element der Vorrichtung 8. Zum einen dient der Mover 20 der Erzeugung einer Relativbewegung gegenüber der Trägerplatte 12 bzw. Antriebsfläche 13. Weiterhin erfolgt eine Interaktion zwischen den Movern 20 oder zwischen den Moverkomponenten. Weiterhin erzeugt der Mover 20 eine Kraft auf die Trägerplatte 12 bzw. Antriebsfläche 13. Hierzu umfasst der Mover 20 zumindest ein Mittel zur Erzeugung eines Magnetfelds, insbesondere einen Magneten, vorzugsweise einen Permanentmagneten 19, der mit ein Wanderfeld erzeugenden Spulen 18 der Trägerplatte 12 bzw. der Antriebsfläche 13 zur Bewegungserzeugung zusammenwirkt. Hierbei wird einen Luftspalt zwischen der Trägerplatte 12 bzw. der Antriebsfläche 13 und dem Mover 20 ausgebildet, so dass eine berührungslose Bewegung des Movers 20 relativ zur Antriebsfläche 13 erfolgen kann. Weiterhin kann der Mover 20 Mittel zur Erkennung einer Position aufweisen.

In einer Ansicht der Figur 2 ist der Mover 20 perspektivisch dargestellt. Eine Unterseite 17 des Movers 20 wirkt mit der Trägerplatte 12 bzw. Antriebsfläche 13 zusammen. An der Unterseite 17 des Movers 20 sind mehrere Permanentmagnete 19 angeordnet. Die Magnetfelder benachbart angeordneter Permanentmagnete 19 unterscheiden sich. Im Wesentlichen besteht die Unterseite 17 aus vier Feldern mit jeweils mehreren Permanentmagneten 19. Der mittlere Bereich der Unterseite 17 weist keine Permanentmagnete 19 auf. Der Mover 20 wird von einem Kollisionsschutz 23 umgeben, was bei einer Vielzahl bewegter Mover 20 vorteilhaft ist.

Die Trägerplatte 12 bzw. Antriebsfläche 13 stellt eine mehrschichtige Komponente gemäß Abbildung 2 dar. Sie weist folgende Basisfunktionalitäten auf. Zum einen umfasst sie Mittel zur Erzeugung einer Relativbewegung gegenüber dem Mover 20. Außerdem wird eine Kraft erzeugt, die auf den Mover 20 wirkt. Außerdem umfasst sie Mittel zur Erzeugung von Distanzen (Luftspalt) zwischen der Trägerplatte 12 und dem Mover 20. Außerdem umfasst die Trägerplatte 12 Mittel zur Erkennung von Positionen sowie Mittel zur Erkennung von Energieübertragung und Mittel zur Übertragung von Informationen.

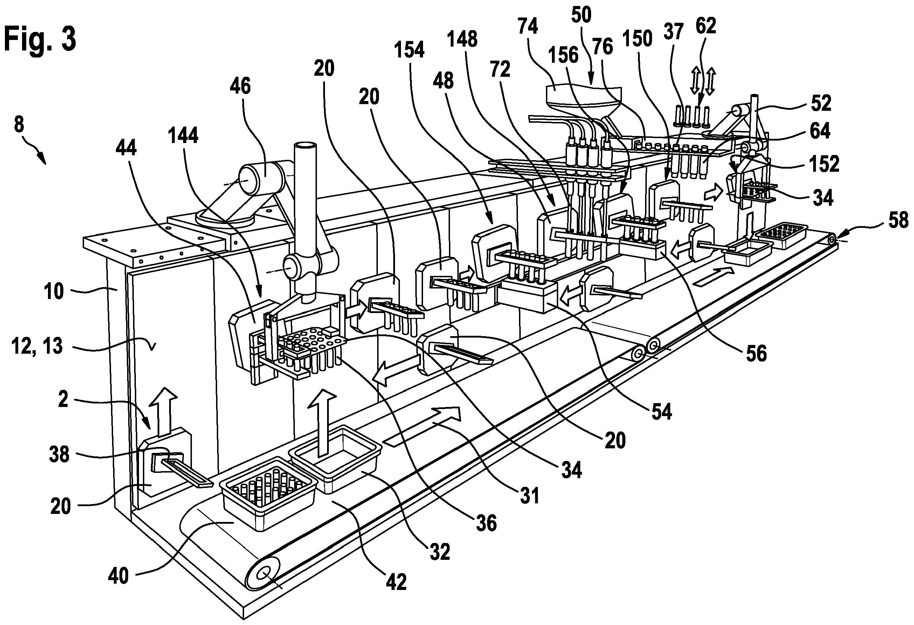

Der Mover 20 weist gemäß Figur 3 zumindest eine Behältnisaufnahme 38 zur Aufnahme zumindest eines zu transportierenden Behältnisses 36 auf. Die Behältnisaufnahme 38 ist vorzugsweise schlitzförmig in der Weise ausgebildet, dass mehrere Behältnisse 36 nebeneinander angeordnet werden können und diese von der Aufnahme 38 gehalten werden. Jedoch ist auch eine andere Ausgestaltung der Behältnisaufnahme 38 möglich. Weiterhin könnte der Mover 20 Mittel zum Bewegen der Behältnisse 36 umfassen. Der Mover 20 ist vorzugsweise vergossen, um die innenliegenden Magnete vor Umgebungseinflüssen wie beispielsweise vor Korrosion zu schützen. Ein Prozessmover 21 ist technisch identisch bzw. ähnlich aufgebaut wie der Mover 20, bewegt jedoch anstelle der Behältnisse 36 Komponenten von Prozessstationen wie nachfolgend noch näher ausgeführt. Das Antriebsprinzip bzw. das Zusammenwirken mit den beschriebenen Antriebsflächen 13 unterscheidet sich jedoch nicht.

Anhand Figur 3 lässt sich die Vorrichtung 8 zur Verarbeitung von insbesondere nestgebundenen Behältnissen 36 näher erläutern. In einem Tub 32, ein wannenförmiger Behälter wie dargestellt, werden in einem Nest 34 befindliche Behältnisse 36 angeliefert. Das Nest 34 dient der Aufnahme der Behältnisse 36 insbesondere im Tub 32. Ein Tubeinlauf 40 bildet die Schnittstelle zu einer nicht gezeigten vorgelagerten Maschine. Die Tubs 32 werden in einer mit einem Pfeil angedeuteten Transportrichtung 31 durch eine Transporteinrichtung 42 bewegt. Verschiedene übliche Transportlösungen (Band, Riemen) können genutzt werden, dargestellt ist eine Lösung mit Transportriemen als Transporteinrichtung 42. Prinzipiell möglich wäre entsprechend der Darstellung gemäß Figur 1 auch in horizontaler Ebene der Transport der Tubs 32 mittels Planarantrieb, also unter Verwendung des Movers 20, der auf der horizontal ausgerichteten Trägerplatte 12 bzw. Antriebsfläche 13 angeordnet und ausgebildet ist zum Transport des Tubs 32.

Gemäß Figur 3 ist die Trägerplatte 12 bzw. Antriebsfläche 13 als vertikale Ebene ausgebildet zur Bewegung der Mover 20. Der Mover 20 bewegt sich von einer links vorne gezeigten Startposition 120 nach oben in eine Vereinzelungsposition 144. In der Vereinzelungsposition 144 befindet sich der Mover 20 in Reichweite eines Entnahmemittels 46. Das Entnahmemittel 46 ist beispielsweise als Roboter bzw. Roboterarm ausgebildet. Es dient der Entnahme eines mit Behältnissen 36 versehenen Nests 34 aus dem Tub 32. Das Entnahmemittel 46 ist in der Lage, durch eine Auf-Abbewegung zumindest eine senkrecht zur Transportrichtung 31 angeordnete Behältnisreihe zu entnehmen und/oder in der Behältnisaufnahme 38 des Movers 20 abzusetzen. Somit werden die in dem Nest 34 befindlichen Behältnisse 36 reihenweise entnommen und somit vereinzelt. Als reihenweise Vereinzelung wird verstanden, dass mehrere Behältnisse 36 im Wesentlichen einreihig senkrecht zur Transportrichtung 31 angeordnet sind.

Gegebenenfalls kann der Mover 20 die Entnahme der Behältnisse 36 aus dem von dem Entnahmemittel 46 bereitgestellten Tub 32 bewerkstelligen, indem der Mover 20 selbst eine entsprechende Entnahmebewegung relativ zum Entnahmemittel 46 erzeugt. In der Entnahmeposition verfährt hierzu der Mover 20 die Behältnisaufnahme 38 über die Öffnungen der zur Entnahme bereit stehenden Behältnisse 36. Die Breite der vorzugsweise schlitzförmigen Ausnehmung der Behältnisaufnahme 38 ist größer als der Durchmesser des Halses des Behältnisses 36. Der Mover 20 verfährt die Behältnisaufnahme 38 in der Weise, dass die Ausnehmung die Behältnisse 36 umschließen kann. Anschließend erfolgt das Halten der von der Behältnisaufnahme 38 umschlossenen Behältnissen 36, indem der Mover 20 die Behältnisaufnahme 38 so verdreht, dass dadurch die Behältnisse 36 geklemmt werden. Die Innenkanten der vorzugsweise schlitzförmigen Ausnehmung kommen dadurch von beiden Seiten in Kontakt mit den Seitenwänden der Behältnisse 36. Nach dem Verdrehen bzw. formschlüssigen Kontakt der Behältnisaufnahme 38 mit den Behältnissen 36 verfährt der Mover 20 nach oben und entfernt die nun reihenweise vereinzelten Behältnisse 36. Alternativ könnte auch das Nest 34 abgesenkt werden.

Die entnommenen Behältnisreihen transportiert der Mover 20 von der Vereinzelungsposition 144 zu einer Wiegeeinrichtung 54 in eine Wiegeposition 154. Hierbei behält der Mover 20 und damit auch die Behältnisaufnahme 38 die leicht verkippte Position bei wie in Figur 3 angedeutet, damit die Behältnisse 36 weiterhin sicher geklemmt und gehalten werden. Diese Wiegeeinrichtung 54 wiegt die leeren Behältnisse 36, dient also der Tara-Wägung. Hierzu könnte der Mover 20 durch eine entsprechende Auf- und Abbewegung in vertikaler Richtung die zu verwiegenden Behältnisse 36 auf der Wiegeeinrichtung 54 freistellen. Das Freistellen erfolgt durch eine gegenläufige Kippbewegung des Movers 20 und damit der Behältnisaufnahme 38, so dass die Behältnisse 36 nicht mehr klemmend gehalten werden. Der besondere Vorteil der reihenweisen Vereinzelung zeigt sich gerade beim Verwiegen. Damit können übliche Wiegeeinrichtungen 54, 56 verwendet werden, die üblicher Weise auf zumindest einreihiges Verwiegen ausgelegt sind. Dies ist bei der bislang üblichen nestweisen Verarbeitung allenfalls mit großem Aufwand möglich, so dass zumeist nur ein geringer Prozentsatz verwogen wird. Das Verwiegen könnte reihenweise oder aber auch einzeln erfolgen.

Nach erfolgter Verwiegung in der (ersten) Wiegeposition 154 transportiert der Mover 20 die gewogenen leeren Behältnisse 36 in eine Füllposition 148, an der eine Füllstation 48 angeordnet ist. Hierzu verkippt der Mover 20 die Behältnisaufnahme 38, so dass die zuvor freigestellten Behältnisse 36 wieder klemmend gehalten werden.

Die Füllstation 48 weist Füllnadeln 72 auf. Die Füllnadeln 72 sind bevorzugt in einer Reihe angeordnet, besonders bevorzugt in einer Reihe senkrecht zur Transportrichtung 31. Bei der abzufüllenden Flüssigkeit kann es sich beispielsweise um Pharmazeutika handeln. In der Füllposition 148 werden die Füllnadeln 72 relativ zu den Behältnissen 36 aufeinander zu bewegt. Dies könnte dadurch erfolgen, dass die Füllnadeln 72 selbst beweglich ausgebildet sind und/oder die Behältnisse 36 durch den Mover 20 bewegt bzw. angehoben werden. In der in Figur 3 gezeigten Variante erfolgt die Relativbewegung allein durch den die Behältnisse 36 bewegenden Mover 20. Der Mover 20 behält zum einen die Verdrehung zum klemmenden Halten der Behältnisse 20 bei. Zum anderen bewegt der Mover 20 die Behältnisse 36 während des Abfüllvorgangs entlang der Achse der Füllnadeln 49. Diese Relativbewegung kann sich während des Füllvorgangs ändern. Mit zunehmendem Füllspiegel im Behältnis 36 senkt der Mover 20 das Behältnis 36 nach unten ab. Dadurch wird störende Blasenbildung während des Abfüllens reduziert. Nach erfolgter Abfüllung werden die Füllnadeln 72 relativ zu den Behältnissen 36 voneinander weg bewegt. Dies könnte dadurch erfolgen, dass die Füllnadeln 72 selbst beweglich ausgebildet sind und/oder die Behältnisse 36 durch den Mover 20 bewegt bzw. abgesenkt werden. Im Ausführungsbeispiel senkt der Mover 20 die Behältnisse 36 weiter nach unten parallel zur Achse der Füllnadeln 72 ab, so dass anschließend eine kollisionsfreie seitliche Bewegung möglich wird.

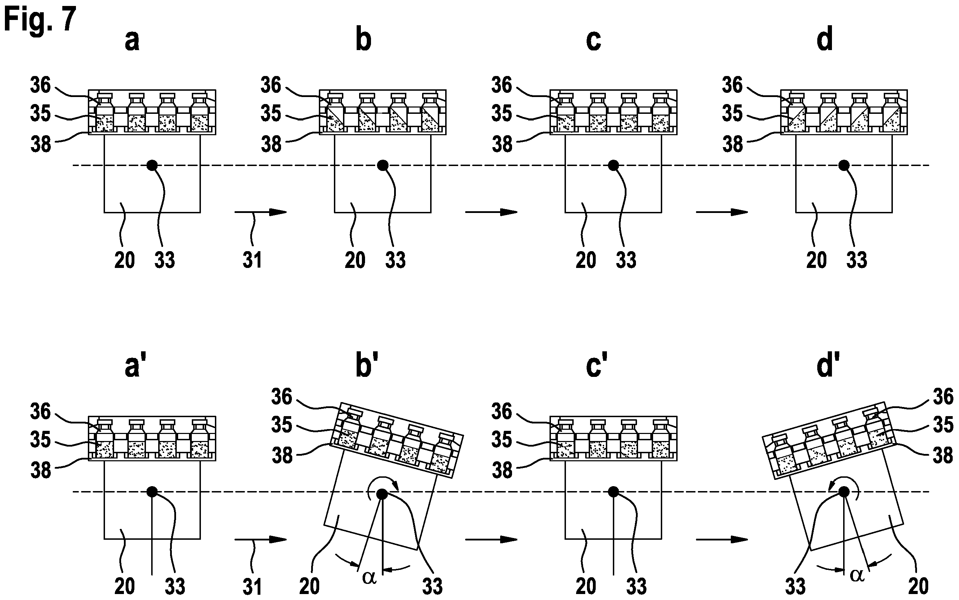

Nach erfolgter Abfüllung transportiert der Mover 20 die befüllten Behältnisse 36 in eine weitere Wiegeposition 156 in den Erfassungsbereich einer (weiteren) Wiegeeinrichtung 56. Der Transport kann nun so erfolgen, dass ein Schwappen der befüllten Behältnisse 36 durch ein geeignetes Verschwenken der Behältnisse 36 um eine horizontale Achse verhindert wird. Hierzu erfolgt nach einem bestimmten Bewegungsprofil ein weiteres Verkippen, wobei das klemmende Halten der Behältnisse 36 beibehalten wird. Die Anti-Schwapp-Funktion wird weiter unten in Verbindung mit Figur 7 näher erläutert.

An der Wiegeeinrichtung 56 erfolgt die Brutto-Wägung. Hierbei erfolgt ähnlich wie in der Tara-Wiegeposition 154 ein Absetzen und Aufnehmen der befüllten Behältnisse 36 auf und von der Wiegeeinrichtung 56 oder alternative Füllmengendetektionseinrichtungen. In der Wiegeposition 156 sind folgende Funktionen zu realisieren: Halten durch entsprechendes Klemmen der Behältnisse 36, Freistellen der Behältnisse 36 durch entsprechendes gegenläufiges Verdrehen der Behältnisaufnahme 38, so dass die Behältnisse 36 nicht mehr klemmend gehalten werden zum Verwiegen, sowie anschließendes klemmendes Halten der Behältnisse 36 durch eine Verdrehung des Movers 20.

Sollte die Brutto-Wägung in der Wiegeposition 156 ergeben, dass eine nichttolerable Menge abgefüllt wurde, könnte der Mover 20 das entsprechende Behältnis 36 ausschleusen und/oder eventuell in die Füllposition 148 zur Nachdosierung bringen.

Die gewogenen Behältnisse 36 bringt der Mover 20 in eine Verschließposition 150, die sich im Erfassungsbereich einer Verschließstation 50 befindet. Die Verschließstation 50 umfasst zumindest ein Setzrohr 64 und einen Stößel 62. Setzrohre 64 und Stößel 62 sind reihenweise, insbesondere in einer Reihe senkrecht zur Transportrichtung 31, angeordnet. Weiterhin werden Verschlüsse 37 wie beispielsweise Stopfen mit Hilfe einer Zuführung 76 den Setzrohren 64 zugeführt, um das befüllte Behältnis 36 zu verschließen. Der Verschluss 37 gelangt in das Innere des Setzrohrs 64. Das Setzrohr 64 ist so ausgebildet, dass der Verschluss 37 umfangsseitig etwas komprimiert wird, so dass er sich anschließend in der Behältnisöffnung wieder ausdehnt und diese so verschließt. Der Verschluss 37 wird in eine geeignete Position oberhalb der Behältnisöffnung gebracht. Nun erfolgt eine Relativbewegung zwischen Behältnis 36 und Verschluss 37, indem der Stößel 62 in das Setzrohr 64 eintaucht und den Verschluss 37 in die Behältnisöffnung drückt. Alternativ bzw. zusätzlich könnte auch das Behältnis 36 selbst durch den Mover 20 hin zum Verschluss 37 bewegt werden. Das Behältnis 36 ist verschlossen.

Anschließend werden die verschlossenen Behältnisse 36 in eine Rücksetzposition 152 gebracht zum Rücksetzen in das Nest 34. Der Mover 20 bringt hierzu die verschlossenen Behältnisse 36 in den Erfassungsbereich einer Handlingseinrichtung 52. Bei dieser Handlingseinrichtung 52 kann es sich beispielsweise um einen Roboter handeln. Die Handlingseinrichtung 52 entnimmt beispielsweise das von einem Tub 32 transportierte leere Nest 34. Der Mover 20 setzt die vereinzelte Behältnisreihe zurück ins Nest 34. Hierzu werden die klemmend gehaltenen Behältnisse 36 in der Rücksetzposition in das Nest 34 gebracht. Durch gegenläufiges Verdrehen des Movers 20 bzw. der Behältnisaufnahme 38 vorzugsweise in die Horizontale wird die Klemmung wieder aufgehoben. Anschließend bewegt der Mover 20 die Behältnisaufnahme 38 ohne die Behältnisse 36.

Nachdem alle Reihen des Nests 34 mit Behältnissen 36 bestückt wurden, setzt die Handlingseinrichtung 52 durch Anheben und Absenken das mit Behältnissen 36 befüllte Nest 34 zurück in das leere Tub 34. Diese Rücksetzfunktionalität lässt sich mit Hilfe des Movers 20 und der Handlingseinrichtung 52, beispielsweise ein Roboter oder externes Achsportal oder ähnliches, realisieren.

Anschließend bewegt sich der Mover 20 von der Rücksetzposition 152 wieder in die Ausgangsposition 140 zurück. Dies könnte beispielsweise bei einem als aktiver Planarantrieb ausgestalteten Mover 20 erfolgen. Alternativ wäre ein Planarantrieb mit einem statischen Wanderfeld und/oder einer zusätzlichen Führung möglich oder aber auch ein passives Fördermittel (wie beispielsweise Kette, Riemen etc.).

Das befüllte Tub 32 steht an einem Auslauf 58 bereit, der als Schnittstelle zu einer nachgelagerten Maschine dient.

Die folgenden optionalen Prozessschritte können in die Verarbeitung integriert werden. Dies kann anwendungsspezifisch und modular erfolgen: Schließbegasung, Vakuumstopfensetzen, Vorbegasung, Doppelkammer, Spritze/Karpule, Bördeln, Mischkugel einsetzen bspw. Suspension, Inspektion (Frontverschluß, Behältnis, Nadel, Stopfensitz, Restsauerstoff, Füllhöhe, Restluftblase), Entnahmestation, Kennzeichnung, Produktverlustvermeidung.

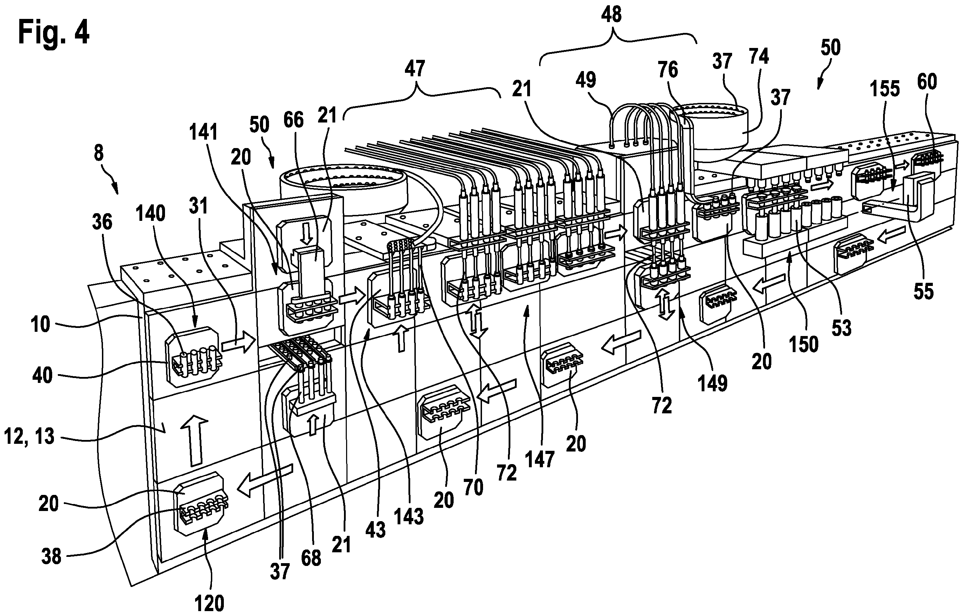

Anhand Figur 4 lässt sich eine Vorrichtung 8 zur Verarbeitung von Behältnissen 36, insbesondere Karpulen, näher erläutern. In nicht näher dargestellter Art und Weise werden zu befüllende Behältnisse 36 angeliefert. Es kann sich hierbei insbesondere um mit flüssigen Pharmazeutika zu befüllende Behältnisse 36 wie beispielsweise Spritzen, Ampullen, Karpulen, Vials oder ähnliches handeln.

Ein Einlauf 40 bildet die Schnittstelle zu einer nicht gezeigten vorgelagerten Maschine. Die Behältnisaufnahme 38 gemäß Figur 4 besteht aus zwei mit koaxialen, teilkreisförmigen Aussparungen versehenen Leisten, die entlang der Oberfläche des Movers 20 verlaufen. Beispielhaft können vier Behältnisse 36 aufgenommen werden. Jedoch auch eine andere, geeignete Anzahl wäre möglich.

Gemäß Figur 4 ist die Trägerplatte 12 bzw. Antriebsfläche 13 als vertikale Ebene ausgebildet zur Bewegung der Mover 20. Der Mover 20 bewegt sich von einer links vorne gezeigten Startposition 120 nach oben in eine Einlaufposition 140. In der Einlaufposition 140 befindet sich der Mover 20 in Reichweite der zugeführten Behältnisse 36. In der Einlaufposition 140 werden über nicht näher gezeigte Handlingseinrichtungen oder ähnliches die zugeführten Behältnisse 36 in die Behältnisaufnahmen 38 gebracht.

Die aufgenommenen Behältnisse 36 transportiert der Mover 20 von der Einlaufposition 140 zu einer Verschließstation 50 insbesondere zum Einsetzen von Kolbenstopfen als hierfür übliche Verschlüsse 37, wie für Karpulen, oben und unten offene Glasröhrchen, typisch, in eine Einsetzposition 141. Hierbei werden die Behältnisse 36 von unten durch Verschlüsse 37 (Stopfen) verschlossen. Die Verschließstation 50 umfasst zumindest einen Niederhalter 66 und einen Stößel 68. Mehrere Niederhalter 66 und Stößel 68 sind parallel zur Transportrichtung 31 bzw. zur Antriebsfläche 13 hintereinander angeordnet entsprechend der Aufnahmegeometrie der Behältnisaufnahme 38. Hierbei sind unterschiedliche Varianten möglich, wie eine Relativbewegung zwischen Stopfen bzw. Verschlüssen 37 und Behältnissen 36 erzeugt wird. So könnten der Niederhalter 66 und/oder der Stößel 68 von einem Servoantrieb oder auch mit Hilfe eines Movers 20 bzw. eines Prozessmovers 21 bewegt werden. In der Figur 4 ist eine Variante gezeigt, bei der Niederhalter 66 und Stößel 68 jeweils von Prozessmovern 21 bewegt werden. Als Prozessmover 21 werden solche Mover 20 verstanden, die bestimmte Prozessschritte (Verschließen z.B. Kolbensetzen, Füllen, etc.) mit den zugehörigen Komponenten bewegen, jedoch nicht unmittelbar die Behältnisse 36. Beim Setzen der Verschlüsse 37 verfährt der obere Prozessmover 21 die Niederhalter 66 zur Oberseite der vom Mover 20 bereitgestellten Behältnisse 36. Der untere Prozessmover 21 bewegt die vom Stößel 68 aufgenommenen Verschlüsse 37 nach oben und drückt sie in die Unterseite der Behältnisse 36 ein.

Nachdem in der Einsetzposition 141 die Behältnisse 36 durch die Verschlüsse 37 (Stopfen) unten geschlossen wurden, bringt der Mover 20 die Behältnisse 36 in eine Kugeleinlegeposition 143. Hierbei befinden sich die Behältnisse 36 unter Zuführungen 70 einer Kugeleinlegestation 43, über die eine oder mehrere Kugeln ins Innere des Behältnisses 36 gebracht werden wie dies für gewisse Darreichungsformen bestimmter Pharmazeutika erforderlich ist.

Nach eingelegter Kugel bringt der Mover 20 die Behältnisse 36 in eine Vorfüllposition 147. Dort können mehrere Füllnadeln 72 einer Vorfüllstation 47 vorgesehen sein, unter die der Mover 20 die vorzufüllenden Behältnisse 36 bringt. Die Füllnadeln 72 sind hierzu in Reihe parallel zur Bewegungsrichtung 31 angeordnet. Es können mehrere Vorfüllstellen vorgesehen werden, in Figur 4 sind exemplarisch drei Vorfüllstellen mit jeweils vier Füllnadeln 72 vorgesehen. Der Mover 20 kann so angesteuert werden, dass er eine freie Vorfüllstelle anfährt. Hierzu ist eine entsprechende Sensorik zur Auswertung der aktuellen Moverpositionen vorzusehen, die die Anwesenheit eines Movers 20 an einer Vorfüllstelle erkennt und über eine übergeordnete Steuerung die jeweiligen Antriebsflächen 13 so aktiviert, dass der Mover 20 eine belegte Vorfüllstelle nicht ansteuert.

Die Füllnadeln 72 könnten entweder starr wie in Figur 4 gezeigt oder aber beweglich angeordnet sein. Jedenfalls erfolgt bevorzugt eine Relativbewegung zwischen Füllnadel 72 und Behältnis 36. Die Abfüllung erfolgt bevorzugt je nach Produkttyp über oder unter dem Füllspiegel, um eine schaumfreie Abfüllung zu unterstützen. Hierzu werden Füllnadel 72 und/oder Behältnis 36 bewegt. Die Füllnadeln 72 könnten von einem Servoantrieb oder einem Mover 20 bzw. Prozessmover 21 bewegt werden. Bei dem Ausführungsbeispiel gemäß Figur 4 jedoch werden die Behältnisse 36 relativ zu den Füllnadeln 72 mit Hilfe des Movers 20 bewegt. Während des Abfüllens entfernt der Mover 20 die Behältnisse 36 parallel zur Achse der Füllnadeln 72 von den Füllnadeln 72 nach unten. Ein Vorteil einer starren Füllnadel 72 liegt aufgrund eines bewegungsfreien Füllvorgangs in reduzierten Partikelemissionen bei diesem partikelempfindlichen Prozessbereich, wie sie ansonsten beispielsweise durch Reibung bei Bewegung der Zuleitungen oder ähnliches auftreten könnten. Bei dieser Variante kann beispielsweise auch eine Festverrohrung der Füllnadeln 72 erfolgen. Auch könnte der Mover 20 durch leichtes Verkippen die Behältnisse 36 während des Abfüllvorgangs auch leicht schräg stellen zur Unterstützung eines schaumfreien Abfüllens. Die Behältnisse 36 könnten leicht schräg gestellt parallel zur Achse der Füllnadeln 72 während des Füllvorgangs abgesenkt werden.

Nach erfolgter Vorfüllung bewegt der Mover 20 die vorgefüllten Behältnisse 36 von der Vorfüllposition 147 in eine Restfüllposition 149. Dort umfasst eine Restfüllstation 49 mehrere in Reihe angeordnete Füllnadeln 72 parallel zur Transportrichtung 31 sowie eine entsprechende Sensorik, über die die genaue Restbefüllung gesteuert und überwacht werden kann. Wie bereits in Verbindung mit der Vorfüllstation 47 soll eine Relativbewegung zwischen Behältnissen 36 und den Füllnadeln 72 während des Abfüllens möglich sein. Bei dem Ausführungsbeispiel gemäß Figur 4 sind nun die Füllnadeln 72 der Restfüllstation 49 beweglich angeordnet auf einem Prozessmover 21. Über die Bewegung des Prozessmovers 21 lässt sich wiederum eine Abfüllung oberhalb oder unterhalb des Füllspiegels erreichen, indem die Füllnadeln 72 während des Abfüllvorgangs parallel zur Achse der Behältnisse 36 sich aus diesen nach oben zurückziehen. Alternativ wäre es denkbar, die Füllnadeln 72 und/oder die Behältnisse 36 während des Abfüllens leicht schräg zu stellen zur Optimierung des Abfüllvorgangs. Alternativ wäre es auch denkbar, zusätzlich zu den Füllnadeln 72 auch die Behältnisse 36 während des Abfüllvorgangs zu bewegen.

Nach erfolgter Restfüllung bringt der Mover 20 die korrekt befüllten Behältnisse 36 von der Restfüllposition 149 in eine Position 151, in der ein Verschluss 37 bzw. eine Kappe dem Behältnis 36 zugeführt wird. Eine Verschließstation 50 umfasst einen Behälter 74, in dem die Verschlüsse 37 bevorratet und über eine Zuführung 76 vereinzelt in geeigneter Weise bereit gestellt werden. Hierbei bewegt der Mover 20 das Behältnis 36 mit einer vorzugsweise kontinuierlichen Abschleppbewegung an der Zuführung 76 entlang, so dass der Verschluss 37 auf der Behältnisöffnung zu liegen kommt.

Anschließend bewegt der Mover 20 das mit einem Verschluss 37 versehene Behältnis 36 in eine Verschließposition 150. Dort befinden sich Verschluss 37 und Behältnis 36 im Erfassungsbereich einer Verschließstation 50. Hierbei kann es sich beispielsweise um eine Bördelstation 53 handeln. Die entsprechenden Bördelrollen sind nicht dargestellt. Der Mover 20 positioniert die Behältnisse 36 in dem Erfassungsbereich der Bördelstation 53, die eine formschlüssige Verbindung des Verschlusses 37 wie beispielsweise eine Aluminiumkappe mit dem Behältnis 36 vornimmt. Danach sind die Behältnisse 36 in gewünschter Weise verschlossen.

Anschließend kann der Mover 20 die verschlossenen Behältnisse 36 in eine optional mögliche Inspektionsposition 155 bringen, die sich im Erfassungsbereich einer Inspektionsstation 55 befindet. Diese könnte mit entsprechender Sensorik ausgestattet sein, um die gewünschten Inspektionskriterien automatisch zu erfassen und auszuwerten.

Anschließend werden die verschlossenen Behältnisse 36 in eine Auslaufposition 160 gebracht im Erfassungsbereich eines Auslaufs 60, der die Behältnisse 36 ggf. weiteren Verarbeitungsschritten zuführt. Die Übergabe lässt sich mit Hilfe des Movers 20 und/oder einer Handlingseinrichtung 52, beispielsweise ein Roboter oder externes Achsportal oder ähnliches, realisieren.

Anschließend bewegt sich der leere Mover 20 von der Auslaufposition 160 wieder in die Ausgangsposition 140 zurück. Dies könnte beispielsweise bei einem als aktivem Planarantrieb ausgestaltetem Mover 20 erfolgen. Alternativ wäre ein Planarantrieb mit einem statischem Wanderfeld und/oder einer zusätzlichen Führung möglich oder aber auch ein passives Fördermittel (wie beispielsweise Kette, Riemen etc.).

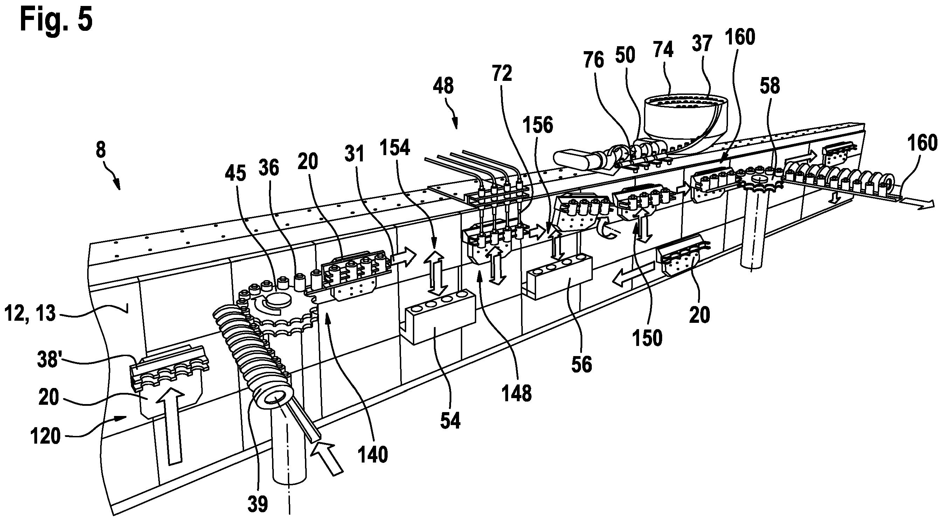

Figur 5 zeigt eine Vorrichtung 8 zur Verarbeitung von Behältnissen 36, insbesondere Ampullen oder Vials. Über eine Förderschnecke 39 werden die abzufüllenden Behältnisse 36 senkrecht zur Ebene der Trägerplatte 12 bzw. Antriebsfläche 13 zugeführt. Ein Umlenkrad 45 übernimmt eine Umlenkung der Behältnisse 36 um 90° parallel zur Oberfläche der Trägerplatte 12 in eine Einlaufposition 140. Dort übernimmt der Mover 20 die Behältnisse 36 aus dem Einlauf 40 in die Behältnisaufnahme 38. Hierzu können geeignete Handlingslösungen vorgesehen werden, die diesen Transfer bewerkstelligen. Beispielhaft können zumindest zwei Mover 20 vorgesehen werden, die unmittelbar aneinander angrenzend zwischen das Umlenkrad 45 und die Trägerplatte 12 bzw. Antriebsfläche 13 gebracht werden. Die Mover 20 bewegen sich mit derselben Geschwindigkeit wie die einlaufenden Behältnisse 36 am Umlenkrad 45. Ein dritter Mover 20 steht schon bereit, wenn sämtliche Behältnisaufnahmen 38 des ersten Movers 20 befüllt sind und dieser den Erfassungsbereich des Umlenkrads 45 verlässt. Während dessen wird der zweite Mover 20 mit aufsynchronisierter Geschwindigkeit mit vom Umlenkrad 45 zugeführten Behältnissen 36 gefüllt und so fort.

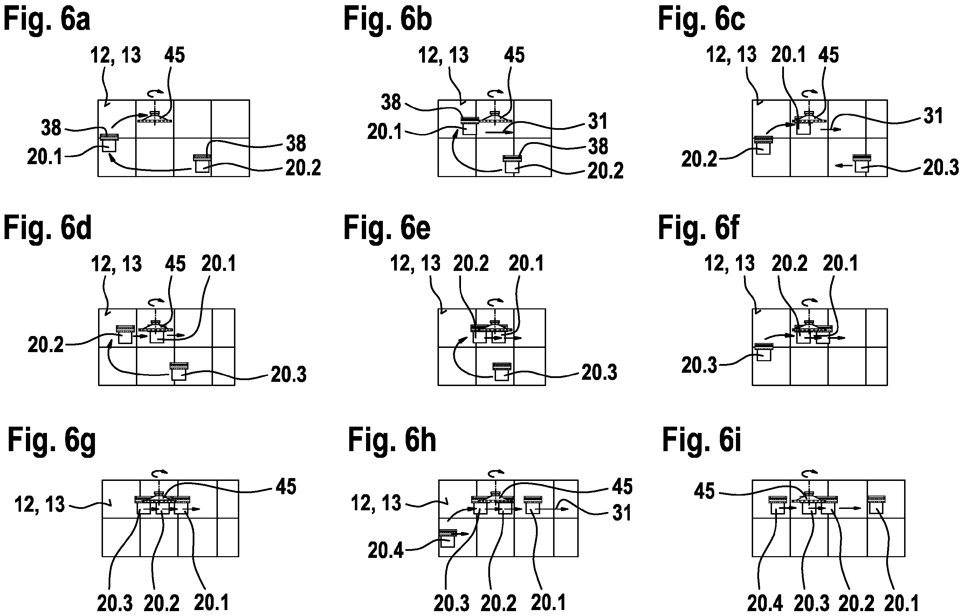

Die verschiedenen Schritte der Aufnahme der über das Umlenkrad 45 zugeführten Behältnisse zeigt Figur 6. Das Umlenkrad 45 dreht sich um eine Achse parallel zur Ebene der Tägerplatte 12 bzw. Antriebsfläche 13 wie auch in Figur 5 gezeigt. Die außenliegenden Behältnisaufnahmen des Umlenkrads 45 sind auch in der zur Antriebsfläche 13 nächstliegenden Position beabstandet zur Antriebsfläche 13 angeordnet. Dieser Abstand ist so gewählt, dass zwischen Antriebsfläche 13 und nächststehender außenliegender Behältnisaufnahme des Umlenkrads 45 die Behältnisaufnahme 38 des Movers 20 so angeordnet werden kann, dass das zu übergebende Behältnis 36 zwischen beide Aufnahmen passt.

In einem ersten Schritt (Figur 6a) befinden sich erster Mover 20.1 und zweiter Mover 20.2 in der Nähe des Umlenkrads 45, jedoch noch nicht im Eingriff. Im zweiten Schritt (Figur 6b) bringt der erste Mover 20.1 die Behältnisaufnahme 38 auf eine Höhe mit dem Umlenkrad 45. Der erste Mover 20.1 richtet die Behältnisaufnahme 38 parallel aus zur Ebene des Umlenkrads 45, beispielsweise horizontal wie in Figur 5 und 6 gezeigt. Der zweite Mover 20.2 nähert sich weiter dem Umlenkrad 45. In einem dritten Schritt (Figur 6c) bewegt sich der erste Mover 20.1 mit derselben Geschwindigkeit wie die Drehgeschwindigkeit der Behältnisaufnahme des Umlenkrads 45. Der erste Mover 20.1 ist aufsynchronisiert. Auch die Behältnisaufnahmen von Umlenkrad 45 und erstem Mover 20.1 stehen sich so gegenüber, dass das dazwischenliegende Behältnis 36 vom Umlenkrad 45 sicher auf den ersten Mover 20.1 überführt werden kann. Der zweite Mover 20.2 nähert sich weiter ebenso wie ein dritter Mover 20.3. In einem vierten Schritt (Figur 6d) wird der zweite Mover 20.2 geeignet ausgerichtet. Der erste Mover 20.1 bewegt sich zur Aufnahme der Behältnisse 36 synchron mit dem Umlenkrad 45 weiter. Der dritte Mover 20.3 bewegt sich weiter auf das Umlenkrad 45 zu. In einem fünften Schritt (Figur 6e) wird der zweite Mover 20.2 aufsynchronisiert, bewegt sich als mit derselben Geschwindigkeit wie die Aufnahmen des Umlenkrads 45. Die Behältnisaufnahme 38 schließt unmittelbar an die des ersten Movers 20.1 an. Der erste Mover 20.1 bewegt sich weiter mit konstanter Geschwindigkeit und nimmt die vom Umlenkrad 45 zugeführten Behältnisse 36 auf. In einem sechsten Schritt (Figur 6f) bewegen sich erster und zweiter Mover 20.1, 20.2 mit derselben Geschwindigkeit weiter im Erfassungsbereich des Umlenkrads 45. Der dritte Mover 20.3 nähert sich weiter. In einem siebten Schritt (Figur 6g) bewegt der dritte Mover 20.3 seine Behältnisaufnahme 38 auf gleiche Höhe mit derjenigen des Umlenkrads 45. Erster und zweiter Mover 20.1, 20.2 bewegen sich weiter. Der erste Mover 20.1 beginnt den Bereich des Umlenkrads 45 zu verlassen. In dem achten Schritt (Figur 6h) befindet sich der erste Mover 20.1 nicht mehr im Eingriff mit dem Umlenkrad 45 und bewegt die nun vollständig mit Behältnissen 36 versehene Behältnisaufnahme 38 zur nächsten Prozessstation. Zweiter und dritter Mover 20.2, 20.3 bewegen sich mit derselben Geschwindigkeit wie das Umlenkrad 45 weiter. Ein vierter Mover 20.4 wird in die Nähe des Umlenkrads 45 gebracht. In einem neunten Schritt (Figur 6i) wird die Behältnisaufnahme 38 des vierten Movers 20.4 auf dieselbe Höhe wie die Aufnahmen des Umlenkrads 45 gebracht. Zweiter und dritter Mover 20.2, 20.3 bewegen sich unmittelbar hintereinander mit derselben Geschwindigkeit wie die Umfangsgeschwindigkeit der Aufnahmen des Umlenkrads 45. Dann schließen sich die Schritte ab Figur 6g wieder an.

Gemäß Figur 5 ist die Trägerplatte 12 bzw. Antriebsfläche 13 als vertikale Ebene ausgebildet zur Bewegung der Mover 20. Der Mover 20 bewegt sich von einer links vorne gezeigten Startposition 120 nach oben in die Aufnahmeposition 140. In der Aufnahmeposition 140 sind somit entsprechende Halte-, Greif- und Positionierfunktionen durchzuführen. Die entnommenen Behältnisreihen transportiert der Mover 20 von der Aufnahmeposition 140 zu einer Wiegeeinrichtung 54 in eine Wiegeposition 154. Die Wiegeeinrichtung 54 umfasst mehrere nicht näher bezeichnete Wägezellen, die in einer Reihe parallel zur Transportrichtung 31 angeordnet sind. Die Wiegeeinrichtung 54 lässt sich wie durch Pfeile angedeutet nach oben und unten bewegen, um mit den zu verwiegenden Behältnissen 36 in Kontakt zu kommen. Diese Wiegeeinrichtung 54 wiegt die leeren Behältnisse 36, dient also der Tara-Wägung. Hierzu kann der Mover 20 durch eine entsprechende Auf- und Abbewegung in vertikaler Richtung die zu verwiegenden Behältnisse 36 auf der Wiegeeinrichtung 54 freistellen. Dies könnte reihenweise oder aber auch einzeln erfolgen. In der Wiegeposition 154 sind folgende Funktionen des Movers 20 bzw. Behältnisträgers 38 zu realisieren: Absetzen und Aufnehmen der Behältnisse 36 auf der Wiegeeinrichtung 54.

Nach erfolgter Verwiegung in der (ersten) Wiegeposition 154 transportiert der Mover 20 die gewogenen leeren Behältnisse 36 in eine Füllposition 148, an der eine Füllstation 48 angeordnet ist. Die Füllstation 48 weist Füllnadeln 72 auf, die bevorzugt in einer Reihe angeordnet sind, die parallel zur Transportrichtung 31 orientiert ist. Bei der abzufüllenden Flüssigkeit kann es beispielsweise um Pharmazeutika handeln. In der Füllposition 148 werden die Füllnadeln 72 relativ zu den Behältnissen 36 bewegt. Dies könnte dadurch erfolgen, dass die Füllnadeln 72 selbst beweglich ausgebildet sind und/oder die Behältnisse 36 durch den Mover 20 bewegt bzw. angehoben werden. Die Füllnadeln 72 könnten in einer nicht gezeigten Alternative ähnlich wie bei dem Ausführungsbeispiel gemäß Figur 4 von einem Prozessmover 21 während des Abfüllvorgangs bewegt werden. Diese Relativbewegung kann sich während des Füllvorgangs ändern wie bereits in Verbindung mit den Ausführungsbeispielen gemäß den Figuren 3 und 4 genauer beschrieben. Nach erfolgter Abfüllung werden die Füllnadeln 72 relativ zu den Behältnissen 36 voneinander weg bewegt. Dies könnte dadurch erfolgen, dass die Füllnadeln 72 selbst beweglich ausgebildet sind und/oder die Behältnisse 36 durch den Mover 20 bewegt bzw. abgesenkt werden.

Nach erfolgter Abfüllung transportiert der Mover 20 die befüllten Behältnisse 36 in eine weitere Wiegeposition 156 in den Erfassungsbereich einer weiteren Wiegeeinrichtung 56. Der Transport kann nun so erfolgen, dass ein Schwappen der befüllten Behältnisse 36 durch ein geeignetes Verschwenken der Behältnisse 36 um eine horizontale Achse verhindert wird wie durch einen entsprechenden Pfeil angedeutet.

An der Wiegeeinrichtung 56 erfolgt die Brutto-Wägung. Hierbei erfolgt ähnlich wie in der Tara-Wiegeposition 154 ein Absetzen und Aufnehmen der befüllten Behältnisse 36 auf und von der Wiegeeinrichtung 56 oder alternative Füllmengendetektionseinrichtungen. Wiederum ist auch die weitere Wiegeeinrichtung 54 beweglich ausgebildet zur Aufnahme der zu verwiegenden Behältnisse 36. In der Wiegeposition 156 sind folgende Funktionen
des Movers 20 bzw. Behältnisaufnahme 38 zu realisieren: Absetzen und Aufnehmen der Behältnisse 36 auf der Wiegeeinrichtung 56.

Sollte die Brutto-Wägung in der Wiegeposition 156 ergeben, dass eine nicht tolerable Menge abgefüllt wurde, könnte der Mover 20 das nicht korrekt befüllte Behältnis 36 ausschleusen oder eventuell in die Füllposition 148 zur Nachdosierung bringen.

Die gewogenen Behältnisse 36 bringt der Mover 20 in eine Verschließposition 150, die sich im Erfassungsbereich einer Verschließstation 50 befindet. Die Verschließstation 50 ist beispielhaft als Stopfensetzstation ausgebildet. Sie umfasst zumindest einen Behälter 74 für die Verschlüsse 37, die eine Zuführung 76 in geeigneter Weise bereit stellt. Nun erfolgt eine Relativbewegung zwischen Behältnis 36 und Verschluss 37. Hierzu bewegt der Mover 20 die offenen Behältnisse 36 nach oben, so dass die Verschlüsse 37 in die Behältnisöffnungen eingesetzt werden können.

Anschließend werden die verschlossenen Behältnisse 36 in eine Auslaufposition 160 zum Überführen in einen Auslauf 60 gebracht. Hierzu ist ein Umlenkrad 58 vorgesehen, das die zugeführten Behältnisse 36 aufnimmt und nach einer 90°-Drehung in den Auslauf 60 in Form einer Förderschnecke überführt. Hierbei wird der Mover 20 auf die Geschwindigkeit des Umlenkrads 58 aufsynchronisiert, so dass er sich in der Übergabeposition mit derselben Geschwindigkeit bewegt wie die Umfangsgeschwindigkeit des Förderrads 58.

Anschließend bewegt sich der Mover 20 von der Auslaufposition 160 wieder in die Startposition 120 zurück. Dies könnte beispielsweise bei einem als aktiven Planarantrieb ausgestalteten Mover 20 erfolgen. Alternativ wäre ein Planarantrieb mit einem statischen Wanderfeld und einer zusätzlichen Führung möglich oder aber auch ein passives Fördermittel (wie beispielsweise Kette, Riemen etc.).

Das befüllte Behältnis 36 steht im Auslauf 60 bereit, der als Schnittstelle zu einer eventuell nachgelagerten Maschine dient.

Die folgenden optionalen Prozessschritte können in die Verarbeitung integriert werden. Dies kann anwendungsspezifisch und modular erfolgen: Begasung, Rollierung, Schlecht-/Gutauslauf, Inspektion, Entnahmestation, Schraubstation, Kennzeichnung, Magazinierung, Produktverlustvermeidung.

Gemäß Figur 7 ist der Mover 20 mit einer Behältnisaufnahme 38 versehen, in der sich mit einem dunkel angedeuteten Produkt 35 befüllte Behältnisse 36 befinden. Der Füllpegel des Produkts 35 ist in einem ersten Zustand a horizontal orientiert. In diesem ersten Zustand a, a' befindet sich das Produkt 35 in Ruhe (Beschleunigung und Geschwindigkeit gleich Null). Der mit einer nicht gezeigten Antriebsfläche 13 zusammenwirkende Mover 20 lässt sich um einen Drehpunkt 33 drehen.

In der oberen Reihe der Figur 7 ist ein Mover 20 ohne Ansteuerung zur Verhinderung des Schwappens des Produkts 35 gezeigt, in der Reihe darunter ein Mover 20 mit Ansteuerung zur Verhinderung des Schwappens des Produkts 35 in den entsprechenden Zuständen gezeigt. In einem zweiten Zustand b, b' beschleunigt der Mover 20 das Produkt mit konstanter positiver Beschleunigung a. Die Geschwindigkeit v nimmt entsprechend linear zu. Das Produkt 35 oben (Zustand b) schwappt, der Füllpegel des Produkts 35 ist gegenüber der Horizontalen geneigt bzw. nicht mehr senkrecht zur Behältnisachse orientiert. Bei der darunter gezeigten Ansteuerung des Movers (Zustand b') zur Verhinderung des Schwappens jedoch verdreht der Mover 20 die Behältnisaufnahme 38 um den Drehpunkt 31 um einen Winkel a. Der Winkel a hängt ab von der jeweiligen Beschleunigung a (tan α = a/g, wobei a die Beschleunigung des Movers 20, g die Erdbeschleunigung). Der Winkel α beschreibt die Verdrehung gegenüber der Normallage bzw. Ruhelage. Durch das Verdrehen des Movers 20 wird gemäß Zustand b' ein Schwappen verhindert. Der Füllspiegel des Produkts 35 bleibt senkrecht zur Behältnisachse ausgerichtet.

Nach Durchlaufen der Beschleunigungsphase (Zustände b, b') schließt sich nun eine Phase mit konstanter Geschwindigkeit an (Zustände c, c'). In dieser Phase ist der Mover 20 nicht mehr um einen Winkel α verdreht (a = 0).

In einer nachfolgenden Phase (Zustände d, d') wird der Mover 20 mit einer konstanten negativen Beschleunigung verzögert. Ohne Anti-Schwapp-Ansteuerung (Zustand d) ist der Füllstand nicht mehr senkrecht zur Behältnisachse ausgerichtet. Mit Anti-Schwapp-Ansteuerung (Zustand d') hingegen verdreht der Mover 20 den Behältnisträger 38 wie gezeigt um einen Winkel α (tan α = a/g, wobei a die (negative) Beschleunigung des Movers 20, g die Erdbeschleunigung). Dadurch bleibt der Füllpegel senkrecht zur Behältnisachse orientiert, ein Schwappen wird somit verhindert.

Die Verwendung von Movern 20, 21, die in Form eines Planarantriebs mit der Trägerplatte 12 bzw. Antriebsfläche 13 zusammenwirken, eröffnen flexible Möglichkeiten sowohl des Behältnistransports wie auch der Bewegung von Komponenten von Prozessstationen. Die beschriebenen bzw. je nach Anwendung vorgesehenen Prozessstationen 38, 40, 43, 44, 47, 48, 49, 50, 51, 53, 54, 55, 56 können, nach einer nicht beanspruchten Ausführungsform, auch in anderer Art und Weise in einer Vorrichtung 8 zusammengestellt werden; aufgrund des flexiblen Transportsystems können Anlagen auch sehr flexibel und modular aufgebaut und ggf. geändert werden. Aufgrund des im Wesentlichen kontaktlosen Antriebssystems eignet sich gerade dieses für die Anwendung in Füll- und/oder Verschließ- und/oder Wiegeeinrichtungen in der pharmazeutischen Industrie, da dort die Anforderungen hinsichtlich Partikelreinheit besonders hoch sind. Jedoch auch andere Anwendungsgebiete sind prinzipiell möglich.

## Patentansprüche

1. Vorrichtung zum Verschließen eines Behältnisses, umfassend zumindest eine Verschließstation (50) zum Verschließen zumindest eines Behältnisses (36), zumindest eine Behältnisaufnahme (38) zum Transport des Behältnisses (36) relativ zur Verschließstation (50), zumindest eine Zuführung (76) zur Zuführung von Verschlüssen (37) in eine geeignete Verschließposition, wobei zumindest eine Antriebsfläche (13) und zumindest ein auf der Antriebsfläche (13) magnetisch ankoppelbarer Mover (20) vorgesehen sind, wobei der Mover (20) auf der Antriebsfläche (13) in zumindest zwei Freiheitsgraden verschiebbar und/oder drehbar angeordnet ist, wobei die Behältnisaufnahme (38) mit dem Mover (20) verbunden ist und wobei der Mover (20) zu dem zugeführten Verschluss (37) bewegbar ausgebildet ist, so dass das Behältnis (36) in Kontakt mit dem Verschluss (37) kommt, **dadurch gekennzeichnet, dass** die Antriebsfläche (13) als vertikale Ebene ausgebildet ist.

2. Vorrichtung nach Anspruch 1, **dadurch gekennzeichnet, dass** mehrere, unabhängig voneinander verfahrbare Mover (20) vorgesehen sind.

3. Vorrichtung nach einem der vorhergehenden Ansprüche, **dadurch gekennzeichnet, dass** der Mover (20) und die damit verbundene Behältnisaufnahme (38) während des Verschließens bewegbar ausgebildet sind.

4. Vorrichtung nach einem der vorhergehenden Ansprüche, **dadurch gekennzeichnet, dass** zumindest ein auf der Antriebsfläche (13) insbesondere magnetisch ankoppelbarer Prozessmover (21) vorgesehen ist, und dass zumindest eine Komponente (72) der Verschließstation (50) mit dem Prozessmover (21) verbunden ist zur Bewegung der Komponente (72) durch den Prozessmover (21).

5. Vorrichtung nach einem der vorhergehenden Ansprüche, **dadurch gekennzeichnet, dass** als Komponente der Verschließstation (50) zumindest ein Setzrohr (64) und/oder zumindest ein Niederhalter (66) und/oder zumindest ein Stößel (68) vorgesehen ist.

6. Vorrichtung nach Anspruch 5, **dadurch gekennzeichnet, dass** der zumindest eine Stößel (62, 68) und/oder das zumindest eine Setzrohr (64) und/oder der zumindest eine Niederhalter (66) und/oder die zumindest eine Zuführung (76) zur Unterstützung des Verschließvorgangs des Behältnisses (36) vorgesehen sind.

7. Vorrichtung nach Anspruch 3 und einem der vorhergehenden Ansprüche 5 oder 6, **dadurch gekennzeichnet, dass** der Mover (20) und die damit verbundene Behältnisaufnahme (38) relativ zum Stößel (62, 68) und/oder zum Setzrohr (64) und/oder zum Niederhalter (66) und/oder zur Zuführung (76) während des Verschließens bewegbar ausgebildet sind.

8. Vorrichtung nach einem der vorhergehenden Ansprüche, **dadurch gekennzeichnet, dass** der Mover (20) zum Bewegen des Behältnisses (36) mit einer vorzugsweise kontinuierlichen Bewegung an der Zuführung (76) entlang ausgebildet ist, so dass der Verschluss (37) auf dem zu verschließenden Behältnis (36) zu liegen kommt.

9. Vorrichtung nach einem der vorhergehenden Ansprüche, **dadurch gekennzeichnet, dass** zumindest eine Füllstation (48, 47, 49) und/oder zumindest eine Wiegeeinrichtung (54, 56) und/oder zumindest eine Inspektionseinrichtung (55) und/oder ein Einlauf (40) und/oder ein Auslauf (60) vorgesehen ist und die Antriebsfläche (13) so ausgestaltet ist, dass der Mover (20) zum Bewegen zumindest der Behältnisaufnahme (38) zu der Füllstation (47, 48,49) und/oder der Wiegeeinrichtung (54,56) und/oder der Inspektionseinrichtung (55) und/oder dem Einlauf (40) und/oder dem Auslauf (60) ausgebildet ist.

10. Vorrichtung nach einem der vorhergehenden Ansprüche, **dadurch gekennzeichnet, dass** der Mover (20) und/oder die Antriebsfläche (13) zumindest ein Magnetfeld erzeugendes Mittel, insbesondere eine Spule (18) und/oder einen Magneten umfassen.

## Claims

1. Apparatus for closing a container, comprising at least one closing station (50) for closing at least one container (36), at least one container receptacle (38) for transporting the container (36) relative to the closing station (50), at least one feeder (76) for feeding closures (37) to a suitable closing position, wherein at least one driving surface (13) and at least one mover (20) which can be magnetically coupled to the driving surface (13) are provided, wherein the mover (20) is arranged on the driving surface (13) such that it can be displaced and/or rotated in at least two degrees of freedom, wherein the container receptacle (38) is connected to the mover (20), and wherein the mover (20) is designed such that it can move to the fed closure (37), so that the container (36) comes into contact with the closure (37), **characterized in that** the driving surface (13) is formed as a vertical plane.

2. Apparatus according to Claim 1, **characterized in that** a plurality of movers (20) which can be moved independently of one another are provided.

3. Apparatus according to either of the preceding claims, **characterized in that** the mover (20) and the container receptacle (38) connected thereto are designed such that they can move during the closing operation.

4. Apparatus according to one of the preceding claims, **characterized in that** at least one process mover (21) which can be, in particular, magnetically coupled to the driving surface (13) is provided, and **in that** at least one component (72) of the closing station (50) is connected to the process mover (21) for moving the component (72) through the process mover (21).

5. Apparatus according to one of the preceding claims, **characterized in that** at least one seating tube (64) and/or at least one holding-down device (66) and/or at least one push rod (68) are/is provided as a component of the closing station (50).

6. Apparatus according to Claim 5, **characterized in that** the at least one push rod (62, 68) and/or the at least one seating tube (64) and/or the at least one holding-down device (66) and/or the at least one feeder (76) are provided for assisting the closing process of the container (36).

7. Apparatus according to Claim 3 and either of the preceding Claims 5 and 6, **characterized in that** the mover (20) and the container receptacle (38) connected thereto are designed such that they can move relative to the push rod (62, 68) and/or to the seating tube (64) and/or to the holding-down device (66) and/or to the feeder (76) during the closing operation.

8. Apparatus according to one of the preceding claims, **characterized in that** the mover (20) is designed to move the container (36) along the feeder (76) with a preferably continuous movement, so that the closure (37) comes to rest on the container (36) to be closed.

9. Apparatus according to one of the preceding claims, **characterized in that** at least one filling station (48, 47, 49) and/or at least one weighing device (54, 56) and/or at least one inspection device (55) and/or an inlet (40) and/or an outlet (60) are/is provided and the driving surface (13) is configured such that the mover (20) is designed to move at least the container receptacle (38) to the filling station (47, 48, 49) and/or the weighing device (54, 56) and/or the inspection device (55) and/or the inlet (40) and/or the outlet (60).

10. Apparatus according to one of the preceding claims, **characterized in that** the mover (20) and/or the driving surface (13) comprise at least one magnetic field-generating means, in particular a coil (18) and/or a magnet.

## Revendications

1. Dispositif pour fermer un contenant, comprenant au moins une station de fermeture (50) destinée à fermer au moins un contenant (36), au moins un logement à contenant (38) destiné à transporter le contenant (36) par rapport à la station de fermeture (50), au moins un système d'acheminement (76) destiné à acheminer des éléments de fermeture (37) dans une position de fermeture appropriée, au moins une surface d'entraînement (13) et au moins un mécanisme (20) pouvant être accouplé de façon magnétique sur la surface d'entraînement (13) étant présents, le mécanisme (20) étant disposé sur la surface d'entraînement (13) de manière à pouvoir être coulissé et/ou tourné dans au moins deux degrés de liberté, le logement à contenant (38) étant relié au mécanisme (20) et le mécanisme (20) étant configuré de façon mobile par rapport à l'élément de fermeture (37) acheminé, de sorte que le contenant (36) entre en contact avec l'élément de fermeture (37), **caractérisé en ce que** la surface d'entraînement (13) est réalisée sous la forme d'un plan vertical.

2. Dispositif selon la revendication 1, **caractérisé par** la présence de plusieurs mécanismes (20) pouvant être déplacés indépendamment les uns des autres.

3. Dispositif selon l'une des revendications précédentes, **caractérisé en ce que** le mécanisme (20) et le logement à contenant (38) qui y est relié sont configurés pour pouvoir être déplacés pendant la fermeture.

4. Dispositif selon l'une des revendications précédentes, **caractérisé par** la présence d'au moins un mécanisme de processus (21) pouvant être accouplé, notamment de façon magnétique, sur la surface d'entraînement (13), et en ce qu'au moins un composant (72) de la station de fermeture (50) est relié au mécanisme de processus (21) en vue du déplacement du composant (72) par le mécanisme de processus (21).

5. Dispositif selon l'une des revendications précédentes, **caractérisé en ce que** le composant prévu de la station de fermeture (50) est au moins un tube de pose (64) et/ou au moins un serre-flan (66) et/ou au moins un coulisseau (68).

6. Dispositif selon la revendication 5, **caractérisé en ce que** l'au moins un coulisseau (62, 68) et/ou l'au moins un tube de pose (64) et/ou l'au moins un serre-flan (66) et/ou l'au moins un système d'acheminement (76) sont prévus pour assister l'opération de fermeture du contenant (36).

7. Dispositif selon la revendication 3 et l'une des revendications 5 ou 6, **caractérisé en ce que** le mécanisme (20) et le logement à contenant (38) qui y est relié sont réalisés de façon mobile par rapport au coulisseau (62, 68) et/ou au tube de pose (64) et/ou au serre-flan (66) et/ou au système d'acheminement (76) pendant la fermeture.

8. Dispositif selon l'une des revendications précédentes, **caractérisé en ce que** le mécanisme (20) est configuré pour déplacer le contenant (36) le long du système d'acheminement (76) avec un mouvement de préférence continu, de sorte que l'élément de fermeture (37) vient reposer sur le contenant (36) à fermer.

9. Dispositif selon l'une des revendications précédentes, **caractérisé par** la présence d'au moins une station de remplissage (48, 47, 49) et/ou d'au moins un appareil de pesage (54, 56) et/ou d'au moins un appareil d'inspection (55) et/ou d'une entrée (40) et/ou d'une sortie (60) et la surface d'entraînement (13) est configurée de telle sorte que le mécanisme (20) est configuré pour déplacer au moins le logement à contenant (38) par rapport à la station de remplissage (47, 48, 49) et/ou à l'appareil de pesage (54, 56) et/ou à l'appareil d'inspection (55) et/ou à l'entrée (40) et/ou à la sortie (60) .

10. Dispositif selon l'une des revendications précédentes, **caractérisé en ce que** le mécanisme (20) et/ou la surface d'entraînement (13) comportent au moins un moyen qui génère un champ magnétique, notamment une bobine (18) et/ou un aimant.
